# EUROPEAN PATENT SPECIFICATION

(11) **EP 1 447 193 B1**
(45) Date of publication and mention of the grant of the patent: **06.10.2010**
(21) Application number: 04250750.9
(22) Date of filing: 12.02.2004
(51) Int. Cl.: B28C 5/42

(54) **Concrete Mixer**
Betonmischtrommel
Tambour Mélangeur

(30) Priority: 13.02.2003 GB 0303301
(43) Date of publication of application: 18.08.2004
(73) Proprietor: McPhee Bros (Blantyre) Ltd, Blantyre, Lanarkshire G72 0JF (GB)
(72) Inventor: McFarlane, Brinsley Leslie George, Blantyre, Lanarkshire G72 0JF (GB)
(74) Representative: Shanks, Andrew

(56) References cited:
- DE-A1- 4 333 087
- US-A1- 2002 071 336
- PATENT ABSTRACTS OF JAPAN vol. 018, no. 453 (M-1662), 24 August 1994 (1994-08-24) & JP 06 144104 A (SOGO CONCRETE SERVICE:KK), 24 May 1994 (1994-05-24)

## Description

The present invention relates to a concrete mixer drum. In particular, but not exclusively, the present invention relates to a concrete mixer drum including a quick-release manhole cover for selectively releasably closing a manhole.

Mobile concrete mixers having a mixing drum mounted on a truck chassis are well known in the building industry. Such concrete mixers are used to transport liquid concrete (comprising cement, sand and water) from a plant to a building site where the concrete is to be used. The concrete mixer drum is typically mounted at an angle on the truck chassis with an opening of the drum at some height above the ground. The drum is rotated in a first direction to draw materials into the drum and during transportation to the building site, and includes internal screws or ribs which expel concrete from the drum through a discharge chute when the drum is rotated in an opposite direction.

Access to the interior of the drum is required for cleaning and maintenance purposes. Accordingly, the drums are typically manufactured including a manhole which is closed by a manhole cover that is securely bolted to the drum using, typically, twelve separate bolts. To gain access to the drum interior, an operator must release each of the bolts and remove the manhole cover, before climbing through the manhole. This is a time consuming process, and frequently the operator does not possess the tools required to release the bolts. Also, the manhole cover is usually sealed using a viscous sealant which requires replacing each time the manhole is opened. Most operators find this process laborious and are concerned about correct re-application of the sealant following closing of the manhole. Furthermore, concrete residue inside the drum can cause the manhole cover to become adhered to the drum such that, even following release of the bolts, the manhole cover cannot be removed. The bolts also suffer from a tendency to corrode, further restricting the ability to release the manhole cover.

For these and other reasons, it has been found that operators have a tendency to climb into the drum through a loading aperture in a material loading chute located adjacent the drum opening. This is dangerous because the drum opening and the loading aperture are not designed to provide access to the drum interior, and the drum opening is typically several metres above ground level.

US 2002/0071336 describes a concrete mixer. The concrete mixer includes a drum body having a device located within a recess in the drum body surface.

DE 4333087 describes a concrete mixer device including a drum body with a manhole for access to an interior of the drum body. A manhole cover is also provided together a closure mechanism operable to close the manhole cover with respect to the drum body.

It is amongst the objects of embodiments of the present invention to obviate or mitigate at least one of the foregoing disadvantages. In particular, it is amongst the objects of embodiments of the invention to provide a quick-release manhole cover for a concrete mixer drum.

According to the present invention, there is provided a concrete mixer drum adapted for receiving concrete according to claim 1.

There is provided a manhole cover for a manhole of a rotatable concrete mixer drum adapted for receiving concrete, the manhole cover including a locking mechanism adapted to be mounted externally of a body of the drum, the locking mechanism operable to lock the manhole cover with respect to the drum body to selectively releasably close the manhole.

The locking mechanism of the present invention is easily operated to open or close the drum manhole. When operated to close the manhole, the locking mechanism securely clamps the manhole cover to the manhole opening. It will be understood that the locking mechanism is mounted externally of the drum in that all of the parts of the locking mechanism are external of the drum. Thus, no parts of the locking mechanism extend through the drum, in contrast, for example, to conventional nut and bolt assemblies. Accordingly, it will be understood that external mounting of the locking mechanism isolates the locking mechanism from the drum interior. This prevents damage to the locking mechanism from contact with liquid concrete during use of the concrete mixer. However, whilst the locking mechanism is externally mounted, the manhole cover and thus parts of the locking mechanism may be located within an outer circumference or perimeter defined by the drum. The manhole cover is recessed, as will be described below. When the manhole is open, unrestricted access through the manhole is allowed by the external mounting of the locking mechanism.

Preferably, the manhole cover is pivotally coupled with respect to the drum. This allows the manhole to be opened and the manhole cover to be swung open whilst the weight of the manhole cover is borne by the drum. The manhole cover may be coupled to the drum by a hinge. The hinge may include a plurality of joints, and may include a first joint between the drum and part of the hinge and a second joint between part of the hinge and the manhole cover. This may ease manipulation of the manhole cover, for example, by allowing both translational movement of the manhole cover towards and away from the manhole, as well as a pivoting movement with respect to the drum, where the manhole cover swings or rotates towards or away from the manhole. This is of particular use where the manhole cover is relatively deep (to provide the cover with sufficient strength to resist forces exerted on the cover in use), as the hinge eases location of the manhole cover in the manhole to close the manhole. Alternatively, the manhole cover may be adapted to be releasably mounted with respect to the drum. This may allow removal of the manhole cover from the drum when the locking mechanism is operated to open the manhole.

The manhole cover is located within a circumference or perimeter defined by the drum and is located inwardly of an outer surface of the drum. The manhole cover, and the locking mechanism, are located in a recess in the drum and extend or protrude into the drum interior. Accordingly, the manhole cover is located such that no part of the cover or locking mechanism protrudes beyond the outer surface of the drum. This is of particular importance as any parts protruding from the rotating drum may require adjustment of standard clearances between the drum and other parts of the concrete mixer. More importantly though, any protruding parts would have a potential to cause serious damage or injury when the drum is rotated. For these and other reasons, manhole covers provided on alternative drums (such as milk transporters) would be quite unsuitable for a concrete mixer drum. The manhole may be provided in a plate or the like coupled to an inner surface of the drum, which may define a pocket within the drum isolated from concrete.

The manhole cover may include a coupling for restricting rotation of the manhole cover with respect to at least one of the hinge or drum, to prevent the manhole cover from contacting an outer surface of the drum when the manhole is open. The coupling may extend between the manhole cover and the hinge and may comprise a shaft, rod, bolt, cable or the like.

The manhole cover may be lockable in an open position, for example, by releasably locking the cover to part of the drum or concrete mixer.

Preferably, the locking mechanism comprises a quick-release locking mechanism. It will be understood that a quick-release locking mechanism can be operated relatively simply and with few movements. The locking mechanism may be adapted to convert an applied rotational force into a translational force on the manhole cover, to exert a clamping force on the manhole cover to close the manhole.

The locking mechanism may comprise a locking arm moveable generally perpendicular to a plane or surface of the manhole cover in a direction towards and away from the manhole. The locking arm may be adapted to engage at least one restraint for restraining the locking arm, to lock the manhole cover with respect to the drum. The restraint may be coupled to or may form part of the drum. The locking arm may be rotatably mounted with respect to the manhole cover. The locking mechanism may comprise a threaded member such as a threaded nut, collar or the like, rotatably mounted on a threaded shaft on the manhole cover. Thus, rotation of the threaded member may translate the member along the shaft, to advance or retract the threaded member with respect to the shaft. The locking arm may be coupled to the threaded member for movement along the shaft therewith. It will be understood that this allows the locking arm to be moved towards or away from the manhole cover to translate the locking arm with respect to the threaded shaft, for exerting a force on the manhole cover. The locking arm may cooperate with the restraint to exert a force on the manhole cover when the locking arm comes into contact with the restraint. Preferably, the locking arm is rotatably mounted with respect to the threaded member by a bearing or the like. This allows the locking arm to be carried along the shaft by rotation of the threaded member, without the locking arm itself being rotated. Preferably also, the bearing comprises a thrust bearing, capable of supporting and transmitting a clamping force on the manhole cover.

The locking mechanism may be adapted to be manually operated and may include an operating member for allowing a user to operate the mechanism. The operating member be coupled to or may form part of the threaded member and may be rotatable to in turn rotate the threaded member. The locking mechanism may further comprise a lever or the like for engaging the operating member to rotate the operating member, or the operating member may be adapted to be gripped by a user for rotating the operating member and may include a handle. Alternatively, the locking mechanism may be automated. For example, the locking mechanism may include a motor coupled to the threaded member for rotating the threaded member.

In a further alternative, the locking mechanism may comprise at least one locking member moveable in a direction generally parallel to a plane or surface of the manhole cover for engaging a restraint. The locking member and restraint may cooperate to exert a translational force on the manhole cover to clamp the cover to the manhole. For example, the restraint and/or the locking member may comprise a shaped or angled surface adapted to urge the locking member inwardly towards the manhole when the locking member is moved to engage the restraint. The locking member may comprise an operating member rotatable to move the locking member, similar to the operating member described above.

The manhole may comprise a seal for sealing between the manhole cover and the manhole. The seal may be carried by the manhole, the manhole cover or both may carry a seal. The manhole may also comprise a seal guard for preventing contamination of the seal by materials in the drum. The seal guard may comprise a ring, plate or the like, and may be provided on an inside surface of the drum adjacent the manhole and adapted to abut the manhole cover when the manhole is closed.

The drum may include a plurality of manhole covers and may include a manhole cover according to the invention and a conventional manhole cover.

It will be understood that the manhole cover may be used with any type of concrete mixer whether mobile (truck mounted or transportable as a separate unit) or fixed. Indeed, reference herein to a concrete mixer is to a mixer for storage and mixing of cement based products such as concretes and mortars. The manhole cover has particular uses in concrete mixers including a rotating drum, due to the ability of the manhole and the locking mechanism to be located so that when the manhole is closed, no part protrudes beyond an outer surface of the drum.

It will also be understood that the manhole cover may equally be used in alternate environments, for example, in storage or transportation tankers, ships or other vehicles or vessels, or may function as a door, such as a water-tight door in a ship.

Finally, it will be understood that references herein to a manhole are to an aperture suitably sized and shaped to provide passage for a person.

Embodiments of the present invention will now be described, by way of example only, with reference to the accompanying drawings, in which:
Fig. 1 is a schematic side view of a concrete mixer including a concrete mixer drum having a manhole cover, in accordance with an embodiment of the present invention;
Fig. 2 is a perspective view of the manhole cover of Fig. 1 and a manhole of the drum, the manhole cover shown in an open position;
Fig. 3 is a top view of the manhole cover of Figs. 1 and 2, with parts of the cover removed for clarity;
Fig. 4 is a sectional view of part of the manhole cover of Figs. 1 and 2, shown in the closed position of Fig. 1;
Fig. 5 is an enlarged view of part of the manhole cover of Fig. 4;
Fig. 6 is an exploded view of a locking mechanism of the manhole cover;
Fig. 7 is a side view of part of the locking mechanism;
Fig. 8 is a top view of an operating member forming part of the locking mechanism;
Fig. 9 is an enlarged view of a seal provided between the manhole cover and the manhole in the closed position of Fig. 4;
Fig. 10 is a perspective view of the manhole;
Figs. 11 and 12 are side and end views, respectively, of a hinge of the manhole cover;
Fig. 13 is a perspective view of a restraint forming part of the locking mechanism;
Figs. 14, 15 and 16 are side, end and plan views, respectively, of a lever for operating the locking mechanism of Fig. 2;
Fig. 17 is a sectional view of part of a concrete mixer drum having a manhole cover, in accordance with an alternative embodiment of the present invention, taken along a main axis of the drum;
Fig. 18 is a partial sectional view of the drum of Fig. 17, taken in a direction perpendicular to the main drum axis; and
Figs. 19 and 20 are enlarged views of parts of the manhole cover of Fig. 17.

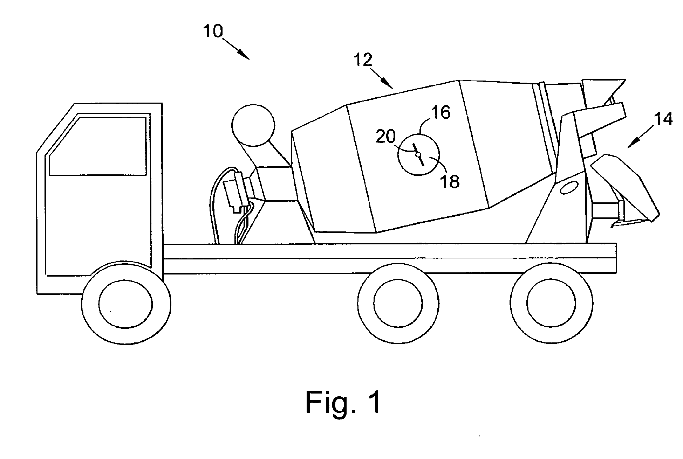

Referring firstly to Fig. 1, there is shown a schematic side view of a concrete mixer with a drum in accordance with a preferred embodiment of the present invention. The concrete mixer 10 includes a rotatable drum 12 for receiving concrete mounted on the back 14 of the mixer, the drum 12 including a manhole 16 for access to an interior of the drum 12, a manhole cover 18 and a locking mechanism 20 mounted externally of the drum 12. The locking mechanism 20 is operable to lock the manhole cover 18 with respect to the drum 12 to selectively releseably close the manhole 16 in a quick-release fit.

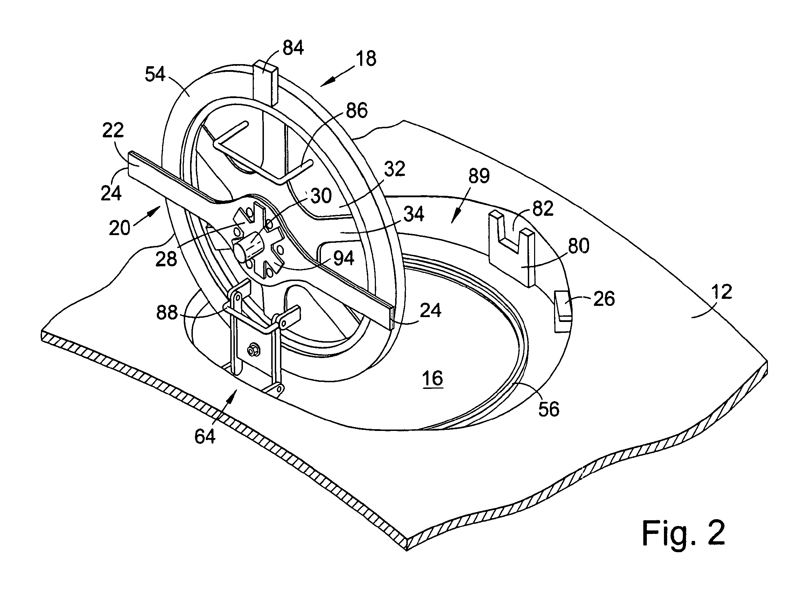

Turning now to Fig. 2, the manhole 16 and manhole cover 18 are shown in more detail. Only part of the drum 12 is shown in Fig. 2, for ease of reference, and the manhole cover 18 is shown in Fig. 2 in an open position, allowing access to an interior of the drum 12 through the manhole 16.

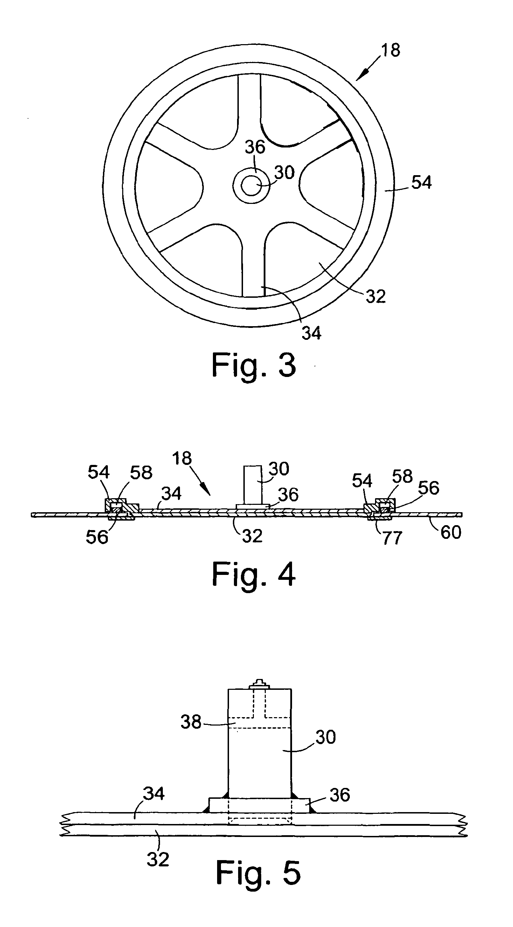

In general terms, the manhole 16 is closed as follows. The manhole cover 18 is pivotally coupled to the drum 12 and is swung from the open position of Fig. 2 to a closed position (Fig. 4) where the cover 18 lies adjacent the manhole 16. A locking arm 22 of the locking mechanism 20 is then rotated until ends 24 of the locking arm 22 are aligned with respective restraints 26 (one shown in Fig. 2) mounted on the drum 12. An operating member in the form of a hexagonal spoke 28 is coupled to the locking arm 22. The spoke 28 is rotated and travels along a threaded shaft 30 mounted on the manhole cover 18, translating the locking arm 22 and moving it away from the manhole cover 18. This movement is continued to bring the locking arm ends 24 into abutment with the restraints 26, and further rotation of the spoke 28 then exerts an inwardly directed clamping force on the manhole cover 18, by cooperation between the locking arm 22 and the restraints 26. The manhole cover 18 is thus securely clamped to the manhole 16 in a quick, simple, easily repeatable procedure.

When it is desired to open the manhole 16, this procedure is repeated in reverse by rotating the spoke 28 in the opposite direction to bring the locking arm 22 out of abutment with the restraints 26, then rotating the locking arm 22 to move the arm ends 24 away from the restraints 26, and then swinging the manhole cover 18 open.

The manhole 16, manhole cover 18 and its operation will now be described in more detail with reference also to Figs. 3-16. Fig. 3 is a top view of the manhole cover 18 with the locking mechanism 20 removed, for clarity, whilst Fig. 4 is a partially sectioned view of the manhole cover 18 in a closed position, again with the locking mechanism 20 removed. The cover 18 includes a mild steel inner disc 32 and an outer rib plate 34, which strengths the cover 18. The outer rib plate 34 is typically of HARDOX (Trade Mark), a type of steel. As shown in the enlarged view of Fig. 5, the threaded shaft 30 is welded to the outer rib plate 34 and a support washer 36 is located around the shaft 30 and welded to both the rib plate 34 and the shaft. The shaft 30 includes grease passages 38 for lubrication of parts of the locking mechanism 20, as will be described below.

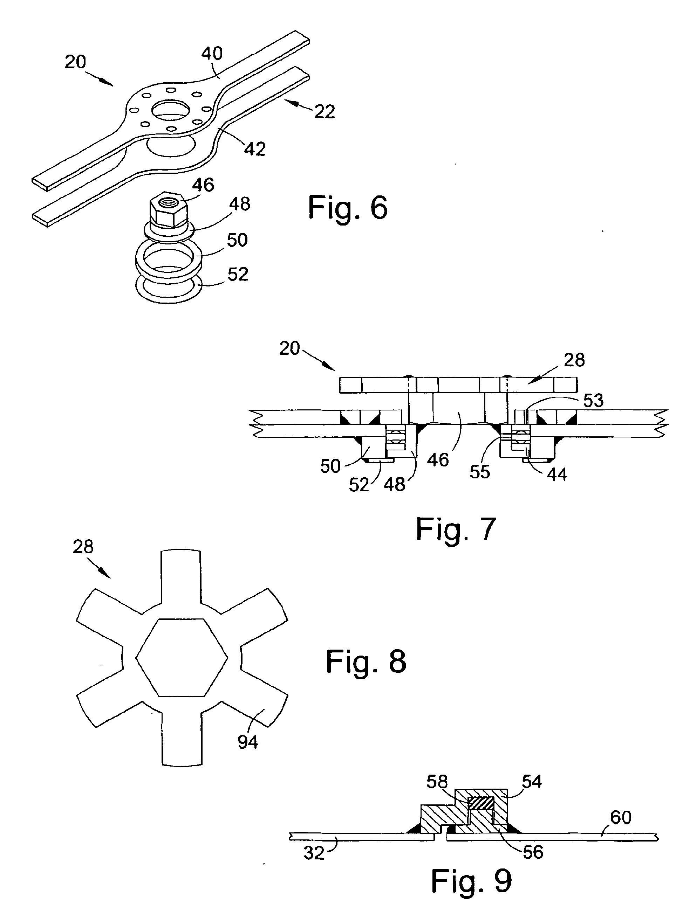

Fig. 6 is an exploded view showing the main parts of the locking mechanism 20. The locking arm 22 comprises upper and lower arm parts 40, 42 to facilitate mounting of the arm on a thrust bearing 44, shown in the side view of Fig. 7. The thrust bearing 44 permits rotation of the locking arm 22 whilst allowing transmission of a clamping force through the bearing to clamp the manhole cover 18 to the manhole 16. The mechanism 20 thus allows the manhole 16 to be locked closed though application of a single point load on the manhole cover 18, transmitted through the shaft 30. This exerts a consistent clamping force on the cover 19 around the cover perimeter, clamping the cover to the manhole 16.

The mechanism 20 also includes a threaded member comprising a nut 46, a bearing shoulder 48, a washer spacer 50 and a washer 52. The locking mechanism 20 is assembled and mounted to the manhole cover 18 as follows. The bearing shoulder 48 is welded to the nut 46 and the bearing 44 is then mounted on the shoulder. The upper and lower locking arm parts 40, 42 are welded together and the washer spacer 50 is welded to the lower arm part 42. The locking arm 20, and washer spacer 50 are then located with the upper arm part 40 resting on the bearing 44. The washer 52 is then welded to the washer spacer 50 to secure the locking arm 22 to the bearing shoulder 48 and thus to the nut 46. The arm 22 is thus rotatably mounted with respect to the nut 46. The hex spoke 28, shown in more detail in the plan view of Fig. 8, is then welded to the nut 46 and the assembly is threaded onto the threaded shaft 30 extending from the manhole cover 18. Lubrication ports 53, 55 in the upper arm part 40 and shoulder 48 allow lubrication of the bearing 44 through the grease passages 38 in the shaft 30.

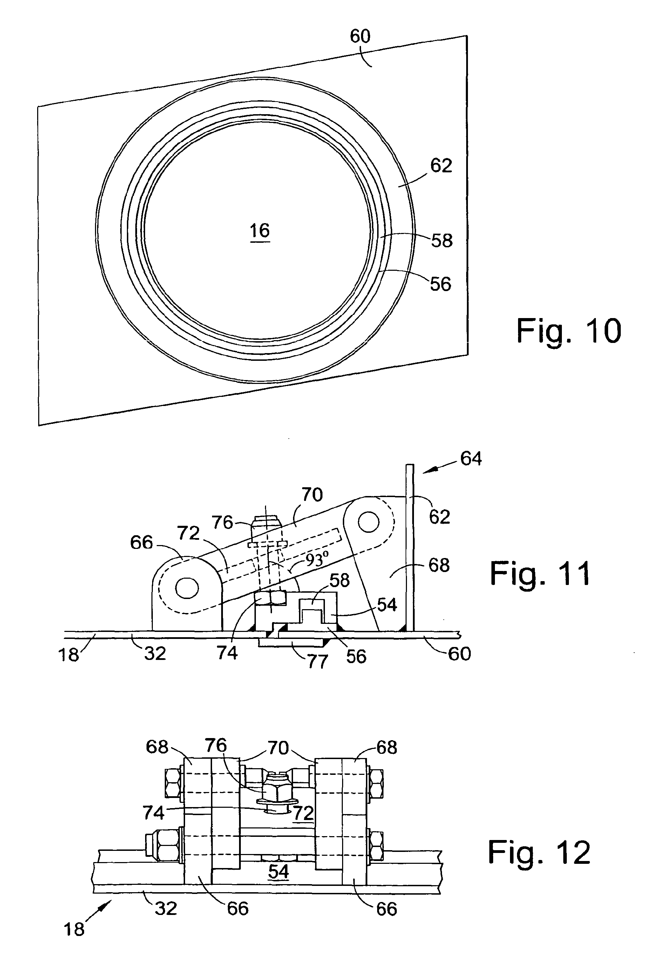

Fig. 9 is an enlarged view of part of the manhole 16 and cover 18 shown in the closed position of Fig. 4, and illustrates a cover sealing rim 54, which is welded to the edge of the manhole inner disc 32. In use, the rim 54 engages with an outer sealing rim 56 mounted around the manhole 16, as shown in the perspective view of Fig. 10. A seal 58 is located on the outer rim 56 between the cover sealing rim 54 and the outer rim 56. The seal 58 is compressed when the manhole 16 is closed, to securely seal the manhole cover 18 to the manhole 16, although the cover rim 54 shoulders out on the outer rim 56 when sufficient force is applied to the manhole cover 18 through the locking mechanism 20.

As shown in Fig. 10, the manhole 16 is formed in a flat plate 60 and a short cylinder 62 is welded to the plate 60 extending upwardly from the plate. The cylinder 62 serves for coupling the manhole 16 and manhole cover 18 to the drum 12, as will be described below. The manhole cover 18 is coupled to the cylinder 62 by a hinge 64 shown in the side and end views of Figs. 11 and 12. The hinge 64 includes mounting stubs 66 on the manhole inner disc 32 and corresponding stubs 68 on the cylinder 62. Connecting arms 70 are pivotally coupled at opposite ends to the respective stubs 66, 68 and a plate 72 extends between the two arms 70.

The plate 72 can pivot about both the stubs 66 and 68, allowing both a translational movement of the manhole cover 18 towards and away from the manhole, and rotation. The hinge 64 thus assists in manipulation of the relatively deep cover 18, allowing the manhole cover 18 to be moved away from the manhole 16 to release the cover rim 54 from the sealing rim 56 and then rotated open, and vice versa. A coupling in the form of a bolt 74 is also welded to the sealing rim 54 and extends through an aperture in the plate 72. The bolt 74 carries a nut 76 which abuts the plate 72 when the manhole 18 is swung open, to restrict rotation of the manhole cover with respect to the arms 70. This prevents the manhole cover from coming into contact with the surface of the drum 12 when opened. Fig. 11 also illustrates an annular guard plate 77 welded around the manhole 16 inside the drum 12, which abuts the manhole cover 18 to prevent contamination of the joint between the cover seal rim 54 and the outer sealing rim 56 by materials in the drum.

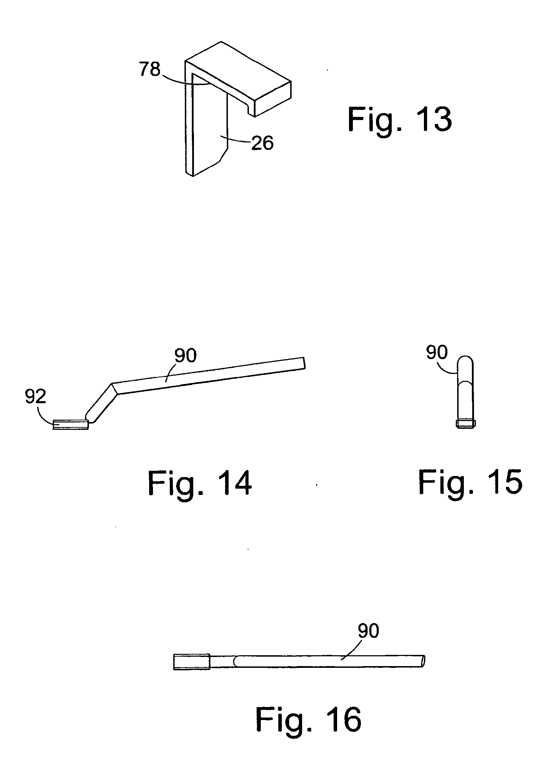

The restraints 26 are shown in the perspective view of Fig. 13 and it will be noted that the restraints are generally L-shaped, defining a recess 78 for receiving the ends 24 of the locking arm 22. The restraints 26 are each welded to the cylinder 62. An alignment bracket 80 (Fig. 2) is also welded to the cylinder 62, and defines a slot 82 for receiving a finger 84 on the cover sealing rim 54, to ensure correct alignment of the manhole cover 18 with the manhole 16. Two handles 86, 88 are also welded to the manhole inner disc 32 and the stubs 66, respectively, to allow manipulation of the manhole cover 18.

The manhole cover 18 is assembled in the drum 12 as follows. A hole is cut in the drum 12 for receiving the cylinder 62, and the plate 60 and cylinder 62 are passed through the hole. The flat plate 60 is then welded to the inside of the drum 12 and the cylinder 42 welded to the drum 12. The plate 60 thus forms a pocket for the manhole 16 and cover 18 isolated from concrete in the drum 12. The manhole 16 and plate 60 protrude into the drum interior and the manhole 16 and cover 18 define a recess 89 (Fig. 2) in the drum 12. The manhole cover 18 and the locking mechanism 20 are thus located within an outer circumference of the drum, such that no parts protrude from the drum outer surface. This ensures that no injury or damage is caused during rotation of the drum 12. The portion of the cylinder 62 protruding from the surface of the drum 12 (due to the drum's curved surface) is then cut away flush with the surface of the drum. The manhole cover 18 is then secured to the drum 12 by bolting the hinge arms 70 to the stubs 66 and 68 and the cover 18 is then ready for operation.

The hex spoke 28 is rotated to operate the locking mechanism 20 using a lever 90, shown in the side, top and end views of Figs. 14 to 16. The lever 90 includes a recess 92 which engages the arms 94 of the hex spoke to assist in rotation of the spoke. The manhole cover 18 can then be closed and locked or opened as described above.

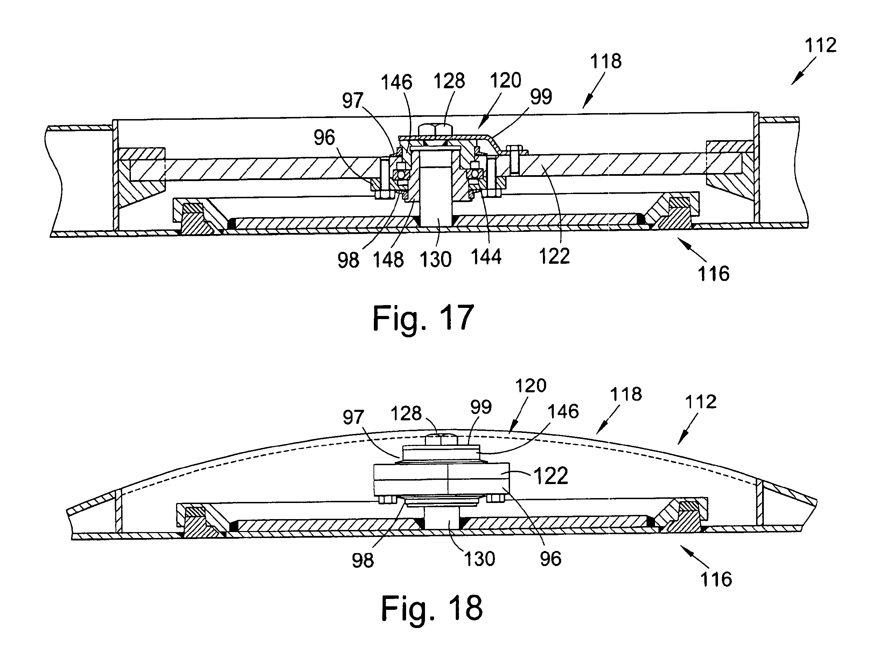

Turning now to Fig. 17, there is shown a sectional view of part of a concrete mixer drum, indicated generally by reference numeral 112, having a manhole cover indicated generally by reference numeral 118, in accordance with an alternative embodiment of the present invention. The drum 112 is shown in the figure sectioned along a main axis of the drum. The drum 112 and manhole cover 118 are of similar structure to the drum 12 and manhole cover 18 of Figs. 1-16, and like components share the same reference numerals incremented by 100.

For brevity, only the differences between the manhole cover 118 and the cover 18 of Figs. 1-16 will be described herein.

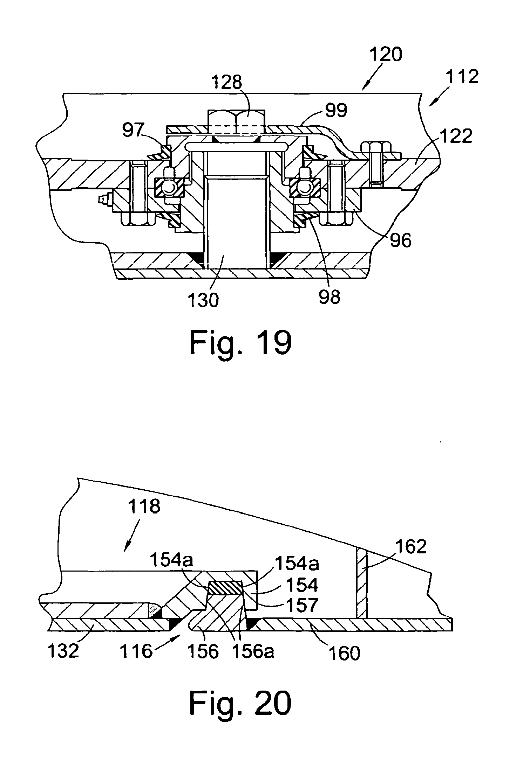

The manhole cover 118 is also shown in the partial sectional view of Fig. 18, taken in a direction perpendicular to the main drum axis (across a diameter of the drum), whilst parts of the cover 118 are shown in the enlarged views of Figs. 19 and 20 and will be discussed below.

The manhole cover 118 includes a locking mechanism 120 which includes a nut and bearing shoulder 146, 148 with a locking arm 122 carried on the bearing shoulder 148, in a similar fashion to the manhole cover 18. However, the bearing 144 is held between the locking arm 122 and a cover plate 96 which is releasably secured to the locking arm. This allows the bearing 144 to be removed for cleaning/maintenance and replacement, as required. Also, the locking mechanism includes upper and lower seals 97, 98 for sealing the bearing 144, and these are best shown in Fig. 18 and the enlarged view of Fig. 19. These seals 97,98 prevent the ingress of debris or dirt into the bearing which would impair bearing performance.

The locking mechanism 120 includes an operating member 128 in the form of a nut, which is rotated by a spanner to translate the locking arm 122 relative to shaft 130 when required. Also, a locking plate 99 is provided for securing the operating nut 128 after the manhole 116 has been closed and locked, to prevent rotation of the operating nut 128 and thus avoiding undesired release of the locking mechanism 120. The plate 99 is releasably secured to the locking arm 122 and is removed when it is desired to release the lock.

The outer sealing rim 156 of the manhole 116 and the cover sealing rim 154 of the manhole cover 118 are also of different structure, and are shown in the enlarged view of Fig. 20. Specifically, the male manhole sealing rim 156 defines a tapered male rim having flanks 156a, and the cover sealing rim 154 defines a tapered female rim having corresponding flanks 154a. It will be understood that the male and female rims 154, 156 are tapered in that the respective flanks 154a are angled towards each other, as are the flanks 156a. The flanks 154a, 156a are also disposed at an angle (non-parallel) relative to an edge surface 157 of the cover 118.

In this fashion, when the manhole cover 118 is closed, the flanks 154a, 156a are brought into abutment. This ensures that there are no clearances between the flanks into which concrete, concrete constituents or other materials could permeate, in use, which could potentially cause the manhole cover 118 to become stuck.

The manhole cover 118 is closed, locked and unlocked in a similar fashion to the cover 18 of Figs. 1-16.

Various modifications may be made to the foregoing without departing from the scope of the present invention.

The manhole cover may be releaseably mounted with respect to the drum. Thus, the manhole cover may be held in place by the locking mechanism and when the locking mechanism is released, the manhole cover may be removed from the drum.

The coupling for restricting rotation of the manhole cover may comprise a shaft, rod, cable or the like. The threaded member may comprise a collar or other member and the threaded member may be rotated by an operating member such as a handle or by a power tool. Alternatively, the locking mechanism may be automated and, for example, a motor may be coupled to the threaded member to drive and rotate the member.

A seal may be mounted to the manhole cover or two seals may be provided, one mounted to the manhole and one to the manhole cover.

The locking mechanism may include a locking member moveable in a direction generally parallel to a plane or surface of the manhole cover. For example, a locking arm may be mounted off centre on a wheel or arm pivotally mounted to the manhole cover, rotation of the wheel or arm moving the locking member to engage a restraint. The restraint and/or the locking member may comprise a shaped or angled surface for urging the locking member inwardly towards the manhole.

## Claims

1. A rotatable concrete mixer drum adapted for receiving concrete, the drum including:
a drum body (11);
a drum body recess (89) in an outer surface of the drum body;
a manhole (16) for access to an interior of the drum body, the manhole being located in the recess;
a manhole cover (18); and
a locking mechanism (20) mounted externally of the drum body, the locking mechanism operable to lock the manhole cover with respect to the drum body to selectively releasably close the manhole;
wherein, when the manhole is closed, the manhole cover (18) and the locking mechanism (20) are located in the recess and when the manhole is closed, no part of the manhole cover and no part of the locking mechanism protrude beyond a perimeter defined by the outer surface of the drum body.

2. A concrete mixer drum as claimed in any preceding claim, wherein the locking mechanism is a quick-release locking mechanism.

3. A concrete mixer drum as claimed in any preceding claim, wherein the locking mechanism is operable to exert a locking force on the manhole cover (18) which is substantially uniform around a perimeter of the cover.

4. A concrete mixer drum as claimed in claim 3, wherein the locking mechanism is adapted to exert a single point load locking force on the manhole cover (18).

5. A concrete mixer drum as claimed in any preceding claim, wherein the manhole cover (18) is pivotally coupled to the drum body.

6. A concrete mixer drum as claimed in any preceding claim, wherein the manhole cover (18) is mounted for both translational movement towards and away from the manhole, and pivoting movement relative to the body of the drum.

7. A concrete mixer drum as claimed in any preceding claim, wherein the manhole cover (18) is coupled to the drum body by a hinge (64).

8. A concrete mixer drum as claimed in claim 7, wherein the hinge (64) includes a first joint between the drum body and part of the hinge and a second joint between part of the hinge and the manhole cover.

9. A concrete mixer drum as claimed in any one of claims 1 to 4, wherein the manhole cover is adapted to be releasably mounted to the drum body.

10. A concrete mixer drum as claimed in claim 9, or any one of claims 6 to 8 when dependent on claim 9, wherein the manhole cover includes a coupling (74) for restricting pivoting of the manhole cover with respect to the drum body, to prevent the manhole cover from contacting an outer surface of the drum when the manhole is open.

11. A concrete mixer drum as claimed in claim 10, wherein the manhole cover (18) is coupled to the drum body by a hinge, and wherein the coupling extends between the manhole cover and the hinge.

12. A concrete mixer drum as claimed in any preceding claim, wherein the manhole cover (18) is lockable in an open position.

13. A concrete mixer drum as claimed in any preceding claim, wherein the locking mechanism (20) is adapted to convert an applied rotational force into a translational force on the manhole cover, to exert a locking force on the manhole cover to close the manhole.

14. A concrete mixer drum as claimed in any preceding claim, wherein the locking mechanism comprises a locking arm (22) moveable generally perpendicular to a plane of the manhole cover in a direction towards and away from the manhole, for locking the manhole cover with respect to the drum body.

15. A concrete mixer drum as claimed in claim 14, wherein the locking arm (22) is adapted to engage at least one restraint to lock the manhole cover (18) with respect to the drum body.

16. A concrete mixer drum as claimed in either of claims 14 or 15, wherein the locking arm (22) is rotatably mounted with respect to the manhole cover (18).

17. A concrete mixer drum as claimed in any one of claims 14 to 16, wherein the locking mechanism comprises a threaded member (46, 48, 50, 52) coupled to the locking arm and rotatably mounted on a threaded shaft (30) on the manhole cover such that rotation of the threaded member translates the locking arm along the shaft.

18. A concrete mixer drum as claimed in claim 17, wherein the locking mechanism (20) includes an operating member (128) coupled to the threaded member which is rotatable to in turn rotate the threaded member.

19. A concrete mixer drum as claimed in any one of claims 1 to 12, wherein the locking mechanism (20) comprises at least one locking member moveable in a direction generally parallel to a plane of the manhole cover for engaging a restraint (26).

20. A concrete mixer drum as claimed in claim 19, wherein the locking member and restraint (26) cooperate to exert a translational force on the manhole cover to clamp the cover to the manhole.

21. A concrete mixer drum as claimed in either of claims 19 or 20, wherein the locking mechanism (20) comprises an operating member (128) rotatable to move the locking member.

22. A concrete mixer drum as claimed in any preceding claim, wherein the locking mechanism (20) is adapted to be manually operated.

23. A concrete mixer drum as claimed in any one of claims 1 to 22, wherein the locking mechanism (20) is power assisted.

24. A concrete mixer drum as claimed in any preceding claim, comprising a seal (58) for sealing between the manhole cover and the manhole.

25. A concrete mixer drum as claimed in claim 24, wherein the manhole further comprises a seal guard (77) for preventing contamination of the seal by materials in the drum.

26. A concrete mixer drum as claimed in claim 25, wherein the seal guard (77) is provided on an inside surface of the drum adjacent the manhole and wherein the seal guard is adapted to abut the manhole cover when the manhole is closed.

27. A concrete mixer drum as claimed in any preceding claim, wherein the manhole cover (18) includes a sealing rim (54) adapted to engage a sealing rim (56) of the manhole when the manhole is closed, one of the cover and manhole sealing rims defining a tapered male rim and the other a cooperating tapered female rim, the male and female rims having flanks which are brought into abutment when the manhole is closed.

28. A concrete mixer drum as claimed in claim 17 or any one of claims 18 or 22 to 23 when dependent on claim 18, wherein the locking arm (22) is rotatably mounted to the threaded member by a bearing (144), and wherein the locking mechanism includes a plurality of seals (97, 98) for sealing the bearing.

## Patentansprüche

1. Drehbare Betonmischtrommel, die für das Aufnehmen von Beton ausgebildet ist, wobei die Trommel umfasst:
ein Trommelgehäuse (11);
eine Trommelgehäuseaussparung (89) in einer Außenfläche des Trommelgehäuses;
eine Einstiegsöffnung (16) für einen Zugang zum Inneren des Trommelgehäuses, wobei die Einstiegsöffnung in der Aussparung angeordnet ist;
einen Einstiegsöffnungsdeckel (18); und
einen Verriegelungsmechanismus (20), der extern vom Trommelgehäuse montiert ist, wobei der Verriegelungsmechanismus funktionsfähig ist, um den Einstiegsöffnungsdeckel mit Bezugnahme auf das Trommelgehäuse zu verriegeln, um selektiv lösbar die Einstiegsöffnung zu verschließen;
wobei, wenn die Einstiegsöffnung geschlossen ist, der Einstiegsöffnungsdeckel (18) und der Verriegelungsmechanismus (20) in der Aussparung angeordnet sind, und wobei, wenn die Einstiegsöffnung geschlossen ist, kein Teil des Einstiegsöffnungsdeckels und kein Teil des Verriegelungsmechanismus über einen Umfang hinaus vorstehen, der durch die Außenfläche des Trommelgehäuses definiert wird.

2. Betonmischtrommel nach einem der vorhergehenden Ansprüche, bei der der Verriegelungsmechanismus ein Schnellverschlussverriegelungsmechanismus ist.

3. Betonmischtrommel nach einem der vorhergehenden Ansprüche, bei der der Verriegelungsmechanismus funktionsfähig ist, um eine Schließkraft auf den Einstiegsöffnungsdeckel (18) auszuüben, die im Wesentlichen gleichmäßig um einen Umfang des Deckels vorhanden ist.

4. Betonmischtrommel nach Anspruch 3, bei der der Verriegelungsmechanismus ausgebildet ist, um eine einzelne Punktlastschließkraft auf den Einstiegsöffnungsdeckel (18) auszuüben.

5. Betonmischtrommel nach einem der vorhergehenden Ansprüche, bei der der Einstiegsöffnungsdeckel (18) drehbar mit dem Trommelgehäuse verbunden ist.

6. Betonmischtrommel nach einem der vorhergehenden Ansprüche, bei der der Einstiegsöffnungsdeckel (18) für sowohl eine translatorische Bewegung in Richtung zur und weg von der Einstiegsöffnung als auch eine Drehbewegung relativ zum Gehäuse der Trommel montiert ist.

7. Betonmischtrommel nach einem der vorhergehenden Ansprüche, bei der der Einstiegsöffnungsdeckel (18) mit dem Trommelgehäuse mittels eines Scharniers (64) verbunden ist.

8. Betonmischtrommel nach Anspruch 7, bei der das Scharnier (64) eine erste Verbindung zwischen dem Trommelgehäuse und einem Teil des Scharniers und eine zweite Verbindung zwischen einem Teil des Scharniers und dem Einstiegsöffnungsdeckel umfasst.

9. Betonmischtrommel nach einem der Ansprüche 1 bis 4, bei der der Einstiegsöffnungsdeckel so ausgebildet ist, dass er lösbar am Trommelgehäuse montiert werden kann.

10. Betonmischtrommel nach Anspruch 9 oder einem der Ansprüche 6 bis 8, wenn sie vom Anspruch 9 abhängig sind, wobei der Einstiegsöffnungsdeckel ein Verbindungsstück (74) für das Beschränken der Drehung des Einstiegsöffnungsdeckels mit Bezugnahme auf das Trommelgehäuse umfasst, um zu verhindern, dass der Einstiegsöffnungsdeckel eine Außenfläche der Trommel berührt, wenn die Einstiegsöffnung offen ist.

11. Betonmischtrommel nach Anspruch 10, bei der der Einstiegsöffnungsdeckel (18) mit dem Trommelgehäuse mittels eines Scharniers verbunden ist, und bei dem sich das Verbindungsstück zwischen dem Einstiegsöffnungsdeckel und dem Scharnier erstreckt.

12. Betonmischtrommel nach einem der vorhergehenden Ansprüche, bei der der Einstiegsöffnungsdeckel (18) in einer offenen Stellung verriegelbar ist.

13. Betonmischtrommel nach einem der vorhergehenden Ansprüche, bei der der Verriegelungsmechanismus (20) ausgebildet ist, um eine angewandte Rotationskraft in eine translatorische Kraft auf den Einstiegsöffnungsdeckel umzuwandeln, um eine Schließkraft auf den Einstiegsöffnungsdeckel auszuüben, um die Einstiegsöffnung zu schließen.

14. Betonmischtrommel nach einem der vorhergehenden Ansprüche, bei der der Verriegelungsmechanismus einen Verriegelungsarm (22) aufweist, der im Allgemeinen senkrecht zu einer Ebene des Einstiegsöffnungsdeckels in einer Richtung zur und weg von der Einstiegsöffnung beweglich ist, um den Einstiegsöffnungsdeckel mit Bezugnahme auf das Trommelgehäuse zu verriegeln.

15. Betonmischtrommel nach Anspruch 14, bei der der Verriegelungsarm (22) ausgebildet ist, um mit mindestens einer Beschränkungseinrichtung in Eingriff zu kommen, um den Einstiegsöffnungsdeckel (18) mit Bezugnahme auf das Trommelgehäuse zu verriegeln.

16. Betonmischtrommel nach einem der Ansprüche 14 oder 15, bei der der Verriegelungsarm (22) mit Bezugnahme auf den Einstiegsöffnungsdeckel (18) drehbar montiert ist.

17. Betonmischtrommel nach einem der Ansprüche 14 bis 16, bei der der Verriegelungsmechanismus ein Gewindeelement (46, 48, 50, 52) aufweist, das mit dem Verriegelungsarm verbunden und drehbar auf einer Gewindewelle (30) am Einstiegsöffnungsdeckel montiert ist, so dass die Drehung des Gewindeelementes den Verriegelungsarm längs der Welle translatorisch bewegt.

18. Betonmischtrommel nach Anspruch 17, bei der der Verriegelungsmechanismus (20) ein Betätigungselement (128) umfasst, das mit dem Gewindeelement verbunden ist, das drehbar ist, um wiederum das Gewindeelement zu drehen.

19. Betonmischtrommel nach einem der Ansprüche 1 bis 12, bei der der Verriegelungsmechanismus (20) mindestens ein Verriegelungselement aufweist, das in einer Richtung im Allgemeinen parallel zu einer Ebene des Einstiegsöffnungsdeckels beweglich ist, um mit einer Beschränkungseinrichtung (26) in Eingriff zu kommen.

20. Betonmischtrommel nach Anspruch 19, bei der das Verriegelungselement und die Beschränkungseinrichtung (26) zusammenwirken, um eine translatorische Kraft auf den Einstiegsöffnungsdeckel auszuüben, um den Deckel an der Einstiegsöffnung festzuklemmen.

21. Betonmischtrommel nach einem der Ansprüche 19 oder 20, bei der der Verriegelungsmechanismus (20) ein Betätigungselement (128) aufweist, das drehbar ist, um das Verriegelungselement zu bewegen.

22. Betonmischtrommel nach einem der vorhergehenden Ansprüche, bei der der Verriegelungsmechanismus (20) so ausgebildet ist, dass er manuell betätigt werden kann.

23. Betonmischtrommel nach einem der Ansprüche 1 bis 22, bei der der Verriegelungsmechanismus (20) mit Hilfskraft betätigt wird.

24. Betonmischtrommel nach einem der vorhergehenden Ansprüche, die eine Dichtung (58) für das Abdichten zwischen dem Einstiegsöffnungsdeckel und der Einstiegsöffnung aufweist.

25. Betonmischtrommel nach Anspruch 24, bei der die Einstiegsöffnung außerdem einen Dichtungsschutz (77) für das Verhindern einer Verunreinigung der Dichtung durch Materialien in der Trommel aufweist.

26. Betonmischtrommel nach Anspruch 25, bei der der Dichtungsschutz (77) auf einer Innenfläche der Trommel benachbart der Einstiegsöffnung vorhanden ist, und bei der der Dichtungsschutz so ausgebildet ist, dass er an den Einstiegsöffnungsdeckel anstößt, wenn die Einstiegsöffnung geschlossen ist.

27. Betonmischtrommel nach einem der vorhergehenden Ansprüche, bei der der Einstiegsöffnungsdeckel (18) einen Dichtungsrand (54) umfasst, der ausgebildet ist, um mit einem Dichtungsrand (56) der Einstiegsöffnung in Anlage zu kommen, wenn die Einstiegsöffnung geschlossen ist, wobei einer von Deckeldichtungsrand und Einstiegsöffnungsdichtungsrand einen konischen vorspringenden Rand und der andere einen zusammenwirkenden konischen eingelassenen Rand definiert, wobei der vorspringende und der eingelassene Rand Seitenflächen aufweisen, die angestoßen werden, wenn die Einstiegsöffnung geschlossen ist.

28. Betonmischtrommel nach Anspruch 17 oder einem der Ansprüche 18 oder 22 bis 23, wenn sie vom Anspruch 18 abhängig sind, bei der der Verriegelungsarm (22) drehbar am Gewindeelement mittels eines Lagers (144) montiert ist, und bei der der Verriegelungsmechanismus eine Vielzahl von Dichtungen (97, 98) für das Abdichten des Lagers umfasst.

## Revendications

1. Tambour mélangeur à béton rotatif adapté pour recevoir du béton, le tambour englobant:
un corps de tambour (11) ;
un évidement (89) du corps du tambour dans une surface externe du corps du tambour ;
un trou d'homme (16) pour établir l'accès à une partie interne du corps du tambour, le trou d'homme étant agencé dans l'évidement ;
un couvercle du trou d'homme (18) ; et
un mécanisme de verrouillage (20), monté sur l'extérieur du corps du tambour, le mécanisme de verrouillage servant à verrouiller le couvercle du trou d'homme sur le corps du tambour, pour fermer sélectivement de manière amovible le trou d'homme ;
dans lequel, lorsque le trou d'homme est fermé, le couvercle du trou d'homme (18) et le mécanisme de verrouillage (20) sont agencés dans l'évidement, et lorsque le trou d'homme est fermé, aucune partie du couvercle du trou d'homme et aucune partie du mécanisme de verrouillage ne débordent au-delà d'un périmètre défini par la surface externe du corps du tambour.

2. Tambour mélangeur à béton selon l'une quelconque des revendications précédentes, dans lequel le mécanisme de verrouillage est un mécanisme de verrouillage à libération rapide.

3. Tambour mélangeur à béton selon l'une quelconque des revendications précédentes, dans lequel le mécanisme de verrouillage sert à exercer une force de verrouillage sur le couvercle du trou d'homme (18), pratiquement uniforme autour d'un périmètre du couvercle.

4. Tambour mélangeur à béton selon la revendication 3, dans lequel le mécanisme de verrouillage est adapté pour exercer une force de verrouillage à charge ponctuelle sur le couvercle du trou d'homme (18).

5. Tambour mélangeur à béton selon l'une quelconque des revendications précédentes, dans lequel le couvercle du trou d'homme (18) est accouplé de manière pivotante au corps du tambour.

6. Tambour mélangeur à béton selon l'une quelconque des revendications précédentes, dans lequel le couvercle du trou d'homme (18) est monté de sorte à effectuer un mouvement de translation vers le trou d'homme et à l'écart de celui-ci, et un mouvement de pivotement par rapport au corps du tambour.

7. Tambour mélangeur à béton selon l'une quelconque des revendications précédentes, dans lequel le couvercle du trou d'homme (18) est accouplé au corps du tambour par une charnière (64).

8. Tambour mélangeur à béton selon la revendication 7, dans lequel la charnière (64) englobe une première articulation entre le corps du tambour et une partie de la charnière et une deuxième articulation entre une partie de la charnière et le couvercle du trou d'homme.

9. Tambour mélangeur à béton selon l'une quelconque des revendications 1 à 4, dans lequel le couvercle du trou d'homme est adapté pour être monté de manière amovible sur le corps du tambour.

10. Tambour mélangeur à béton selon la revendication 9 ou selon l'une quelconque des revendications 6 à 8, dépendant de la revendication 9, dans lequel le couvercle du trou d'homme englobe un accouplement (74) pour limiter le pivotement du couvercle du trou d'homme par rapport au corps du tambour, afin d'empêcher le contact entre le couvercle du trou d'homme et une surface externe du tambour lorsque le trou d'homme est ouvert.

11. Tambour mélangeur à béton selon la revendication 10, dans lequel le couvercle du trou d'homme (18) est accouplé au corps du tambour par une charnière, l'accouplement s'étendant entre le couvercle du trou d'homme et la charnière.

12. Tambour mélangeur à béton selon l'une quelconque des revendications précédentes, dans lequel le couvercle du trou d'homme (18) peut être verrouillé dans une position ouverte.

13. Tambour mélangeur à béton selon l'une quelconque des revendications précédentes, dans lequel le mécanisme de verrouillage (20) est adapté pour convertir une force de rotation appliquée en une force de translation appliquée au couvercle du trou d'homme, pour exercer une force de verrouillage sur le couvercle du trou d'homme afin de fermer le trou d'homme.

14. Tambour mélangeur à béton selon l'une quelconque des revendications précédentes, dans lequel le mécanisme de verrouillage comprend un bras de verrouillage (22) pouvant se déplacer en général perpendiculairement à un plan du couvercle du trou d'homme, dans une direction allant vers le trou d'homme et à l'écart de celui-ci, pour verrouiller le couvercle du trou d'homme sur le corps du tambour.

15. Tambour mélangeur à béton selon la revendication 14, dans lequel le bras de verrouillage (22) est adapté pour s'engager dans au moins un moyen de retenue pour verrouiller le couvercle du trou d'homme (18) sur le corps du tambour.

16. Tambour mélangeur à béton selon les revendications 14 ou 15, dans lequel le bras de verrouillage (22) est monté de manière rotative sur le couvercle du trou d'homme (18).

17. Tambour mélangeur à béton selon l'une quelconque des revendications 14 à 16, dans lequel le mécanisme de verrouillage comprend un élément fileté (46, 48, 50, 52) accouplé au bras de verrouillage et monté de manière rotative sur un arbre fileté (30) sur le couvercle du trou d'homme, de sorte que la rotation de l'élément fileté entraîne la translation du bras de verrouillage le long de l'arbre.

18. Tambour mélangeur à béton selon la revendication 17, dans lequel le mécanisme de verrouillage (20) englobe un élément opérationnel (128) accouplé à l'élément fileté, pouvant tourner pour faire tourner à son tour l'élément fileté.

19. Tambour mélangeur à béton selon l'une quelconque des revendications 1 à 12, dans lequel le mécanisme de verrouillage (20) comprend au moins un élément de verrouillage pouvant se déplacer dans une direction généralement parallèle à un plan du couvercle du trou d'homme en vue d'un engagement dans un moyen de retenue (26).

20. Tambour mélangeur à béton selon la revendication 19, dans lequel l'élément de verrouillage et le moyen de retenue (26) coopèrent pour exercer une force de translation sur le couvercle du trou d'homme, afin de serrer le couvercle sur le trou d'homme.

21. Tambour mélangeur à béton selon les revendications 19 ou 20, dans lequel le mécanisme de verrouillage (20) comprend un élément opéraitonnel (128) pouvant tourner pour déplacer l'élément de verrouillage.

22. Tambour mélangeur à béton selon l'une quelconque des revendications précédentes, dans lequel le mécanisme de verrouillage (20) est adapté pour être actionné manuellement.

23. Tambour mélangeur à béton selon l'une quelconque des revendications 1 à 22, dans lequel le mécanisme de verrouillage (20) est assisté par moteur.

24. Tambour mélangeur à béton selon l'une quelconque des revendications précédentes, comprenant un joint d'étanchéité (58) pour établir l'étanchéité entre le couvercle du trou d'homme et le trou d'homme.

25. Tambour mélangeur à béton selon la revendication 24, dans lequel le trou d'homme comprend en outre un moyen de protection du joint d'étanchéité (77) pour empêcher une contamination du joint d'étanchéité par des matériaux contenus dans le tambour.

26. Tambour mélangeur à béton selon la revendication 25, dans lequel le moyen de protection du joint d'étanchéité (77) est agencé sur une surface interne du tambour, en un point adjacent au trou d'homme, le moyen de protection du joint d'étanchéité étant adapté pour buter contre le couvercle du trou d'homme lorsque le trou d'homme est fermé.

27. Tambour mélangeur à béton selon l'une quelconque des revendications précédentes, dans lequel le couvercle du trou d'homme (18) englobe un rebord d'étanchéité (54) adapté pour s'engager dans un rebord d'étanchéité (56) du trou d'homme lorsque le trou d'homme est fermé, l'un du rebord d'étanchéité du couvercle et du rebord d'étanchéité du trou d'homme définissant un rebord effilé mâle, l'autre définissant un rebord effilé femelle à coopération, les rebords mâle et femelle comportant des flancs butant les uns contre les autres lorsque le trou d'homme est fermé.

28. Tambour mélangeur à béton selon la revendication 17 ou selon l'une quelconque des revendications 18 ou 22 à 23, dépendant de la revendication 18, dans lequel le bras de verrouillage (22) est monté de manière rotative sur l'élément fileté par un palier (144), le mécanisme de verrouillage englobant plusieurs joints d'étanchéité (97, 98) pour établir l'étanchéité du palier.
